# EUROPÄISCHE PATENTSCHRIFT

(11) **EP 0 828 625 B1**
(45) Veröffentlichungstag und Bekanntmachung des Hinweises auf die Patenterteilung: **13.02.2002**
(21) Anmeldenummer: 96919772.2
(22) Anmeldetag: 11.05.1996
(51) Int. Cl.: B60K 13/02, F02M 35/10

(54) **VERSCHLUSSSYSTEM ZUR BEFESTIGUNG EINES KUNSTSTOFFELEMENTES AN EINE TRÄGERSTRUKTUR**
CLOSURE SYSTEM FOR SECURING A PLASTIC COMPONENT TO A SUPPORT STRUCTURE
SYSTEME DE FERMETURE POUR LA FIXATION D'UN ELEMENT EN MATIERE PLASTIQUE SUR UNE STRUCTURE SUPPORT

(30) Priorität: 01.06.1995 DE 19520155
(43) Veröffentlichungstag der Anmeldung: 18.03.1998
(73) Patentinhaber: FILTERWERK MANN & HUMMEL GmbH, 71631 Ludwigsburg (DE)
(72) Erfinder: ANDRESS, Heinz, D-71729 Erdmannhausen (DE); HAUPT, Martin, D-71686 Remseck (DE)
(74) Vertreter: Voth, Gerhard, Dipl.-Ing.
(86) Internationale Anmeldenummer: EP9602032
(87) Internationale Veröffentlichungsnummer: WO9638315

(56) Entgegenhaltungen:
- EP-A- 0 441 461
- DE-A- 4 310 510
- DE-B- 1 249 590
- FR-A- 2 276 494
- GB-A- 928 633
- US-A- 4 231 675

## Beschreibung

Die Erfindung betrifft ein Kunststoffelement mit Verschlußsystem, sowie einer Trägerstruktur zum Befestigen des Kunststoffelements.

Aus der DE-B-12 49 590 ist eine dichte formschlüssige Verbindung für Rohrteile mit der Wand eines Filtergehäuses bekannt. Das Filtergehäuse besteht aus einem Metallblech, welches eine quadratische Ausstanzung aufweist, in dieser Ausstanzung wird das Rohrteil eingeführt und durch verdrehen befestigt.

Ein Nachteil des bekannten Systems ist darin zu sehen, daß die ausgestanzte Fläche wesentlich größer ist als der Querschnitt des einzelnen Rohres. Dadurch ergeben sich Probleme hinsichtlich der Dichtheit und der Sicherheit insbesondere bei Schwingungen und Stößen.

Verschlußsysteme zur Befestigung von Kunststoffelementen an einer Trägerstruktur sind in einer großen Anzahl von Varianten bekannt. Beispielsweise sind Kunststoffelemente mit Schnappverschlüssen ausgestattet. Ebenso auch mit Bajonettverschlüssen. Insbesondere bei Kraftfahrzeugen werden eine Vielzahl von Kunststoffelementen an einer Trägerstruktur beispielsweise an einer Karosserie mit Schnapp- oder Rastverschlüssen befestigt. Dabei wird großen Wert auf eine vibrationsfeste Verbindung gelegt, gleichzeitig auch auf geringe Herstellkosten und rasche Montage.

Der Erfindung liegt die Aufgabe zugrunde ein Verschlußsystem zu schaffen, das diese Vorteile aufweist und auch in der Lage ist, komplexere Kunststoffelemente an einer einfachen Trägerstruktur zuverlässig zu befestigen.

Diese Aufgabe wird ausgehend von dem Oberbegriff des Hauptanspruchs durch dessen kennzeichnenden Merkmale gelöst.

Der Kerngedanke der Erfindung liegt darin, das Kunststoffelement so zu gestalten, daß an der Trägerstruktur keine aufwendigen Bearbeitungsvorgänge erforderlich sind bzw. an der Trägerstruktur keine zusätzlichen Elemente benötigt werden. Dies wird dadurch erreicht, daß das Kunststoffelement sowohl mit einer Anlagefläche als auch mit Sicherungselementen ausgestattet ist, so daß an der Trägerstruktur lediglich eine Aussparung erforderlich ist.

Ferner wird vorgeschlagen, an dem Kunststoffelement oder an der Trägerstruktur Rastnasen anzuordnen, die das Lösen des Kunststoffelements verhindern.

Eine weiteres Merkmal der Erfindung liegt in der Anordnung von Einlaufschrägen an den Sicherungselementen. Diese sorgen für eine einfache und rasche Montage.

In bevorzugter Weise besteht die Trägerstruktur aus einem Metallblech. Dieses Metallblech ist beispielsweise Teil der Karosserie eines Kraftfahrzeugs und weist eine Stärke im Bereich von 0,3 bis 3 mm auf. Die Aussparung an dem Metallblech wird zweckmäßigerweise ausgestanzt. Eine vorteilhafte Anwendung des Verschlußsystems wird bei dem Ansaugrohr für eine Brennkraftmaschine in einem Kraftfahrzeug gesehen. Dieses Ansaugrohr führt üblicherweise durch ein Karossierteil in einen Fahrzeugbereich, in dem möglichst gering mit Schmutz oder Feuchtigkeit belastete Luft bzw. nicht durch den Motor erwärmte Luft angesaugt werden kann. Es war bekannt solche Ansaugrohre mit Laschen oder ähnlichem zu versehen und über Blechschrauben an einem Teil der Karosserie zu befestigen. Diese Befestigungsart ist zwar sehr zuverlässig, jedoch kostenintensiv und erfordert einen großen Montageaufwand. Wird das Ansaugrohr mit den Merkmalen des Kunststoffelements ausgestattet dann ist eine einfache aber gleichzeitig auch zuverlässige und vibrationsstabile Befestigung möglich.

Diese und weitere Merkmale von bevorzugten Weiterbildungen der Erfindung gehen außer aus den Ansprüchen auch aus der Beschreibung und den Zeichnungen hervor.

Ausführungsbeispiele der Erfindung sind in den Zeichnungen dargestellt und werden im folgenden näher erläutert. Die Zeichnungen zeigen:
- Figur 1: ein Kunststoffelement insbesondere ein Ansaugrohr, welches an einer flachen Platte angeordnet ist,
- Figur 2: das Kunststoffelement in einer Seitenansicht,
- Figur 3: das Kunststoffelement in Draufsichtdarstellung,
- Figur 4: die Trägerstruktur mit Aussparung,
- Figur 5a-d: die Montageschritte zur Befestigung des Kunststoffelements an einem Metallblech.

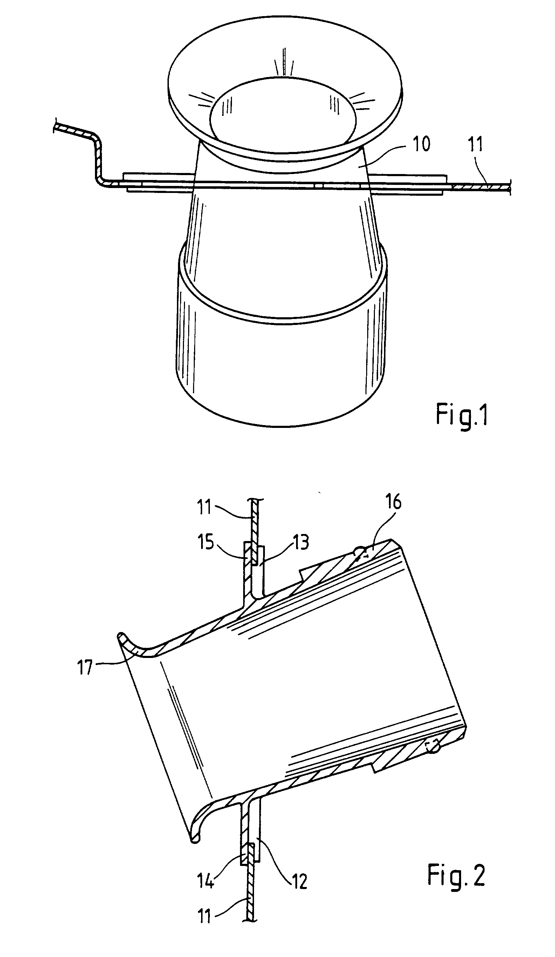

Die Figur 1 zeigt ein Kunststoffelement 10 insbesondere ein Teil eines Ansaugrohres für eine Brennkraftmaschine. Dieses Kunststoffelement ist an einer flachen Platte beispielsweise einem Metallblech 11 befestigt.

Das Kunststoffelement 10 weist, wie in Figur 2 in der Seitenansicht dargestellt, Anlageflächen 12, 13 auf. Diese stellen den Kontakt zu dem Metallblech 11 her. Außerdem sind an dem Kunststoffelement Sicherungselemente bzw. Gegenanlageflächen 14, 15 vorgesehen, die nach der Montage des Kunststoffelements an dem Metallblech ein Lösen verhindern. An dem Kunststoffelement bzw. dem Ansaugrohr wird über einen Befestigungsbereich 16 ein hier nicht dargestelltes weiterführendes Rohr angeschlossen.

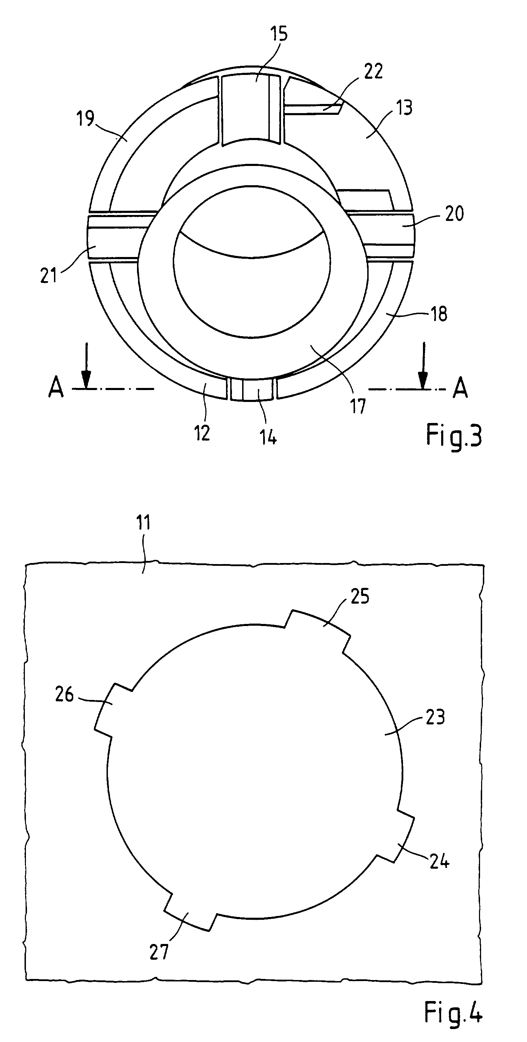

Die Figur 3 zeigt eine Draufsicht auf das Ansaugrohr mit den Anlageflächen 12, 13 der trichterförmigen Öffnung 17 sowie den Sicherungselementen 14, 15. Im Bereich der Sicherungselemente sind die Anlageflächen 12, 13 ausgespart. Der symetrische Aufbau des Kunststoffelements ermöglicht die Anordnung weiterer Anlageflächen 18, 19 sowie weiterer Sicherungselemente 20, 21. In dieser Figur ist auch eine Einlaufschräge 22 ersichtlich. Diese ist auf der Anlagefläche 13 angeordnet.

Die Figur 4 zeigt den Ausschnitt eines Metallblechs 11 mit der ausgestanzten Aussparung 23 zur Aufnahme des Kunststoffelements. Während die Sicherungselemente 14, 15 sowie 20, 21 durch die Ausklinkungen 24, 25, 26, 27 hindurchtreten, liegen die Anlageflächen 12, 13 und 18, 19 des Kunststoffelements an den zwischen den Ausklinkungen verlaufenden Segmenten auf.

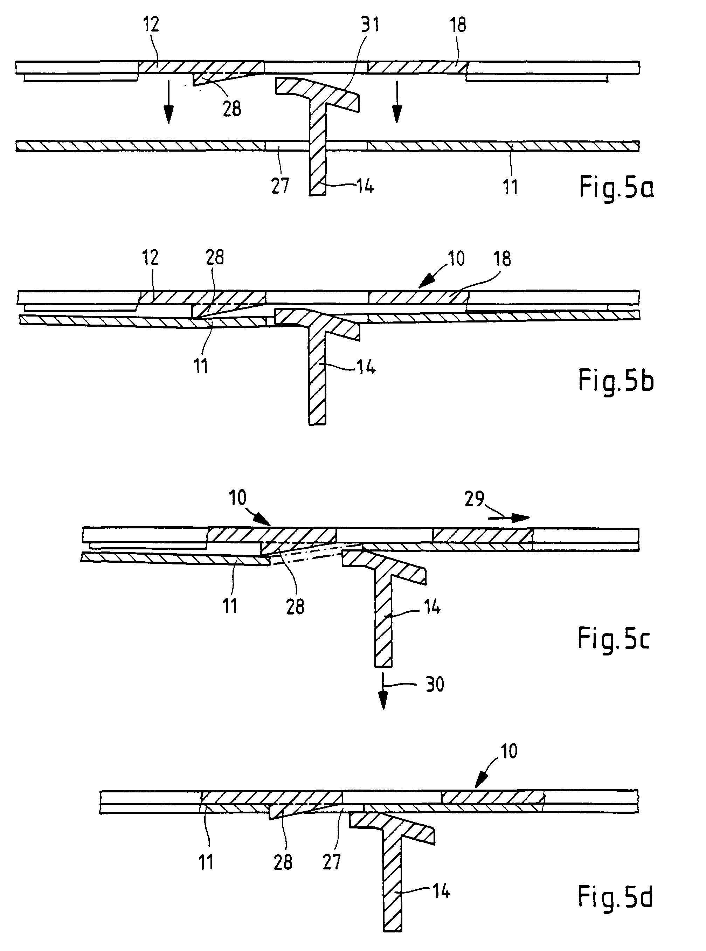

Figur 5 a bis d zeigt in Detaildarstellungen die Montageschritte. Die Detaildarstellungen sind Schnittdarstellungen entlang des Schnittes A-A in Figur 3.

In den Figuren 5a bis d sind die Anlageflächen 12, 18 des Kunststoffelements sowie das Sicherungselement 14 gezeigt. An der Anlagefläche 12 bzw. Anlagefläche 13 gemäß Figur 3 befindet sich eine Einlaufschräge 28. Das Metallblech 11 mit dem ausgeklinkten Bereich 27 befindet sich in der in Figur 5a gezeigten Stellung noch nicht in Anlage mit dem Kunststoffelement.

Figur 5b zeigt die Stellung, in der sich das Kunststoffelement 10 bereits in der axialen Endstellung befindet.

Nun erfolgt gemäß Figur 5c eine Verdrehung des Kunststoffelements 10 in Richtung des Pfeils 29. Das Sicherungselement 14 mit der Abgleitfläche 31 federt gemäß Pfeil 30 nach unten weg. Das Metallblech 11 gleitet auf der linken Seite über die Einlaufschräge 28.

Die Figur 5d zeigt die Endstellung des Kunststoffelements 10 in der arretierten Lage. Die Ausklinkung 27 des Metallblechs befindet sich nunmehr über der Einlaufschräge 28. Das Sicherungselement 14 übt aufgrund seiner Elastizität einen nach oben gerichteten Druck auf das Metallblech 11 aus. In Verbindung mit der Einlaufschräge 28 wird eine Sicherung des Kunststoffelements bzw. des Ansaugrohres in der hier gezeigten Soll-Position erzielt.

Die einzelnen Schritte zeigen, daß eine einfache, manuell durchzuführende Montage des Kunststoffelements möglich ist, wobei nach der. Montage das Kunststoffelement verliersicher an der Trägerstruktur befestigt ist. Durch Anbringen einer Lasche auf der Rückseite (gegenüber der Einlaufschräge 28) kann die Einrastung leicht entriegelt und das Kunststoffteil demontiert werden.

## Patentansprüche

1. "Kunststoffelement (10) mit Verschlußsystem zum Befestigen des Kunststoffelementes (10) an einer Trägerstruktur (11) wobei die Trägerstruktur eine im wesentlichen flache Platte ist welche eine Aussparung zur Aufnahme des Kunststoffelements (10) aufweist, wobei das Kunststoffelement eine Anlagefläche (12,13) besitzt zur Anlage an die Trägerstruktur (11) sowie Sicherungselemente (14,15) welche den Anlageflächen (12,13) entgegengerichtet sind und nach dem Einführen des Kunststoffelementes in die Aussparung der Trägerstruktur und Ausführung einer Drehbewegung das Kunststoffelement (10) an der Trägerstruktur fixieren und wobei die Sicherungselemente Abgleitflächen (31) aufweisen,
**dadurch gekennzeichnet daß**
auf der Anlagefläche (12,13) des Kunststoffelements (10) Rastnasen mit Einlaufschrägen (28) vorgesehen sind zur Verhinderung des Lösens und daß die Sicherungselemente (14,15) aufgrund ihrer Elastizität einen auf das Metallblech gerichteten Druck ausüben".

2. Verschlußsystem nach Anspruch 1, **dadurch gekennzeichnet, daß** die Trägerstruktur (11) ein Metallblech insbesondere Teil der Karosserie eines Fahrzeugs ist, wobei die Stärke des Metallblechs zwischen 0,3 und 3 mm beträgt.

3. Verschlußsystem nach einem der vorherigen Ansprüche insbesondere zur Verwendung an dem Ansaugrohr einer Brennkraftmaschine eines Kraftfahrzeugs, wobei das Kunststoffelement (10) ein Teil des Ansaugrohres darstellt.

## Claims

1. Plastics material component (10), having a closure system for mounting the plastics material component (10) on a carrier structure (11), the carrier structure being a substantially flat plate which includes a recess for accommodating the plastics material component (10), the plastics material component having an abutment face (12,13) for abutment against the carrier structure (11) as well as securing elements (14,15) which are opposed to the abutment faces (12,13) and secure the plastics material component (10) on the carrier structure after the plastics material component has been introduced into the recess in the carrier structure and after a rotary movement has been executed, and the securing elements having sliding faces (31), **characterised in that** locking projections with inclined inlets (28) are provided on the abutment face (12,13) of the plastics material component (10) to prevent such becoming detached, and **in that** the securing elements (14,15) exert a pressure, which is directed towards the metal sheet, because of their resilience.

2. Closure system according to claim 1, **characterised in that** the carrier structure (11) is a metal sheet, more especially part of the bodywork of a vehicle, the thickness of the metal sheet being between 0.3 and 3 mm.

3. Closure system according to one of the previous claims, more especially for use on the inlet pipe of an internal combustion engine of an automotive vehicle, wherein the plastics material component (10) constitutes a part of the inlet pipe.

## Revendications

1. Elément en matière plastique (10) avec système de fermeture pour la fixation de l'élément en matière plastique (10) à une structure support (11) cette structure support étant une plaque pratiquement plane présentant une découpe pour recevoir l'élément en matière plastique (10), l'élément en matière plastique comportant une surface d'appui (12, 13) pour la pose de la structure support (11), ainsi que des éléments de sécurité (14, 15) disposés en opposition par rapport aux surfaces d'appui (12, 13) et qui, à la suite de l'introduction de l'élément en matière plastique dans la découpe de la structure support et après un mouvement de rotation, fixent l'élément en matière plastique (10) sur la structure support, et les éléments de sécurité présentant des surfaces de glissement (31),
**caractérisé en ce que**
sur les surfaces d'appui (12, 13) de l'élément en matière plastique (10) sont montés des taquets d'arrêt avec entrées en biseau (28) pour empêcher tout détachement, et les éléments de sécurité (14, 15), du fait de leur élasticité, n'exercent pas de pression sur la structure support.

2. Système de fermeture selon la revendication 1,
**caractérisé en ce que**
la structure support (11) est une tôle métallique, en particulier une pièce de la carrosserie d'un véhicule à moteur, l'épaisseur de la tôle étant comprise entre 0,3 et 3 mm.

3. Système de fermeture selon l'une des revendications précédentes, en particulier pour son utilisation à un tube d'aspiration d'un moteur à combustion interne d'un véhicule à moteur, l'élément en matière plastique (10) constituant une partie de ce tube d'aspiration.
